(19) Europäisches Patentamt
European Patent Office
Office européen des brevets

(11) **EP 1 205 670 A2**

(12) **EUROPÄISCHE PATENTANMELDUNG**

(43) Veröffentlichungstag:
 **15.05.2002 Patentblatt 2002/20**

(51) Int Cl.[7]: **F15C 5/00**, B81B 1/00,
 B01J 19/00

(21) Anmeldenummer: **01126695.4**

(22) Anmeldetag: **08.11.2001**

(84) Benannte Vertragsstaaten:
 **AT BE CH CY DE DK ES FI FR GB GR IE IT LI LU MC NL PT SE TR**
 Benannte Erstreckungsstaaten:
 **AL LT LV MK RO SI**

(30) Priorität: **08.11.2000 DE 10055374**

(71) Anmelder: **Bartels Mikrotechnik GmbH**
 **44227 Dortmund (DE)**

(72) Erfinder:
 • **Bartels, Frank, Dr.**
  **44227 Dortmund (DE)**
 • **Tahhan, Nader Mark Isam**
  **44139 Dortmund (DE)**

(74) Vertreter: **Pätzold, Herbert, Dr.-Ing.**
 **Dr. Pätzold, Buhl-Müller, Tandler & Kollegen**
 **Steubstrasse 10**
 **82166 Gräfelfing (DE)**

(54) **Verteilerplatte für Flüssigkeiten und Gase**

(57) Die Erfindung stellt eine Verteilerplatte (2) für Flüssigkeiten und/oder Gase bereit, die aus wenigstens einer Schicht (21) besteht, wobei in der Schicht oder den Schichten eine Vielzahl von ersten länglichen Kanälen (211) mit einer ersten geometrischen Ausbildung im wesentlichen in einer ersten Richtung (X) ausgebildet ist, und außerdem eine Vielzahl von zweiten länglichen Kanälen (212) mit einer zweiten geometrischen Ausbildung im wesentlichen in einer zweiten Richtung (Y) ausgebildet ist. Derartige Schichten können insbesondere wenn sie sehr kleine Abmessungen haben und dementsprechend miniaturisiert ausgebildete Kanäle haben auf einfache Weise und kostensparend beispielsweise aus Kunststoff mittels Abformung oder Spritzguß in großer Stückzahl vorgefertigt werden und gelagert werden. Im Bedarfsfall kann in einer derartigen Schicht auf einfache Weise mittels geeigneter Bohrungen in Zwischenräume zwischen nebeneinander angeordneter Kanäle (211,212) mindestens ein erster und zweiter Kanal miteinander verbunden werden, wobei entsprechende Vorgaben durch den bestimmungsgemäßen Einsatz der Verteilerplatte auf ebenso einfache Weise berücksichtigt werden können.

Fig. 6a

**Beschreibung**

Die vorliegenden Erfindung betrifft eine Verteilerplatte für Flüssigkeiten und Gase und insbesondere eine Verteilerplatte zum Verteilen von sehr kleinen Flüssigkeits-und/oder Gasmengen.

Mit zunehmender Miniaturisierung von insbesondere auch chemischen und biologischen Analyseverfahren, bei denen vielfach nur in sehr geringen Mengen vorliegende und im wässrigen Milieu gelöste Substanzen untersucht werden, befindet sich die gegenwärtige Entwicklung des Standes der Technik auf dem Wege hin zu einem sogenannten "Lab on a Chip". Bei einem derartigen biochemischen Untersuchungslabor, das auf einem elektronischen Halbleiter angeordnet sein kann, ist es daher wünschenswert, die im wässrigen Milieu vorliegenden zu untersuchenden biochemischen Substanzen an für die vorzunehmenden Untersuchungen geeigneten Positionen anzuordnen, wobei auch entsprechende Mittel zum Transport der Flüssigkeiten bereitgestellt werden müssen. Eine Zu- und Ableitung der Flüssigkeiten in und von dem miniaturisierten Labor erfolgt dabei per Hand oder automatisiert mittels geeignet ausgebildeter Pipetten. Dies ist jedoch einerseits sehr zeitaufwendig und teuer und andererseits werden für ein automatisiertes Auftragen sehr aufwendig konstruierte Automaten benötigt, deren Bereitstellung ebenfalls sehr kostspielig ist. Es wurde daher versucht, in dem miniaturisierten Labor geeignete Kanäle auszubilden, deren Enden über Schläuche mit sehr kleinem Durchmesser mit Behältern der Proben verbunden sind. Die Montage derartiger Schläuche ist jedoch ebenfalls sehr aufwendig und dementsprechend teuer.

Außerdem existieren miniaturisiert ausgebildete pneumatische Mikropumpen mit einem sehr kleinen Ein- und Ausgang für das zu befördernde Medium und außerdem mit mehreren ventilgesteurten Eingängen für den pneumatischen Antrieb der Pumpe, wobei der für den Betrieb der Pumpe erforderliche Druck von einem separaten Druckgenerator bereitgestellt wird. Die Bereitstellung einer Kopplung des externen Druckgenerators an die sehr kleinen Ventileingänge und einer Zu- und Ableitung des zu befördernden Mediums sowie dessen Verteilung auf mehrere Ausgänge ist ebenfalls mit erheblichem Aufwand verbunden und dementsprechend teuer.

Die oben beschriebenen Nachteile bestehen nicht nur bei der Zu- und Abfuhr von im wässrigen Medium gelösten Substanzen oder Gasen, sondern beispielsweise auch bei der Zufuhr von Kühlflüssigkeit in wärmeempfindliche elektronische Bauteile, und es ist festzustellen, dass diese Nachteile generell bei der Zu- und Abfuhr und Verteilung von Flüssigkeiten und Gasen in sehr kleine Kanäle oder Räume (Behälter) bestehen.

Aufgabe der vorliegenden Erfindung ist daher, eine Vorrichtung bereitzustellen, die es ermöglicht, auf einfache Weise und kostengünstig Flüssigkeiten und/oder Gase zu verteilen, so dass eine Flüssigkeit und/oder ein Gas zu vorgegebenen Positionen an miniaturisierten Bauteilen geführt werden kann und/oder von vorgegebenen Positionen an miniaturisierten Bauteilen abgeleitet werden kann.

Dabei ist auch Aufgabe der vorliegenden Erfindung, ein Verfahren anzugeben, dass es auf einfache und kostengünstige Weise ermöglicht, Flüssigkeiten und oder Gase zu vorbestimmten Positionen eines miniaturisierten Bauteils oder einer miniaturisierten Vorrichtung zu transportieren und/oder von diesen abzuleiten. Weitere Aufgabe der vorliegenden Erfindung ist, eine Vorrichtung bereitzustellen, die es ermöglicht, auf einfache Weise miniaturisiert ausgebildete Bauteile zu koppeln, so daß eine Flüssigkeit und/oder ein Gas von einem Bauteil in das andere Bauteil transportiert werden kann.

Die Aufgaben werden mit den Merkmalen der unabhängigen Ansprüche gelöst. Vorteilhafte Ausführungen der vorliegenden Erfindung sind ohne jede Beschränkung in den Merkmalen der Unteransprüche und/oder der nachfolgenden Beschreibung erwähnt. Zum besseren Verständnis der vorliegenden Erfindung wird die Beschreibung von schematischen Zeichnungen begleitet. Hierzu zeigt:

Fig. 1a und 1b die Draufsicht auf eine erste bzw. zweite Schicht einer ersten Ausführung der vorliegenden Erfindung;

Fig. 2 die erste und zweite Schicht übereinander angeordnet;

Fig. 3a und 3b eine dritte bzw. vierte Schicht der ersten Ausführung der vorliegenden Erfindung;

Fig. 4 die dritte und vierte Schicht übereinander angeordnet;

Fig. 5a eine Draufsicht auf eine erfindungsgemäße Verteilerplatte für Flüssigkeiten gemäß einer ersten Ausführung der vorliegenden Erfindung;

Fig. 5b die Verteilerplatte von Fig. 5a in einer Seitenansicht;

und Fig. 5c eine Abwandlung der ersten Ausführung der vorliegenden Erfindung von Fig. 5a und 5b;

Fig. 6a eine Schicht einer Verteilerplatte gemäß einer zweiten Ausführung der vorliegenden Erfindung;

Fig. 6b einen Ausschnitt einer Abwandlung der Ausführung von Fig. 6a;

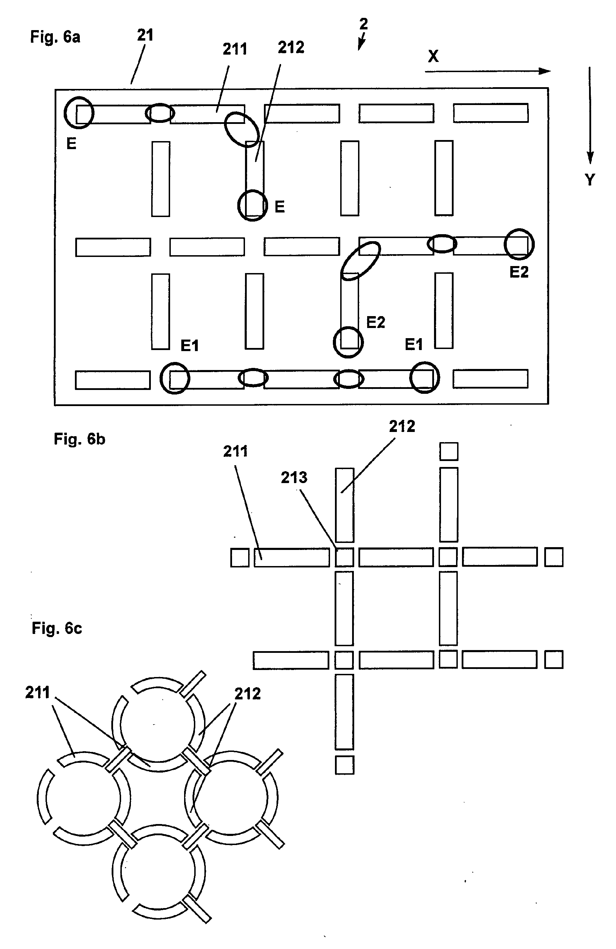

Fig. 6b einen Ausschnitt einer weiteren Abwandlung der Ausführung von Fig. 6a;

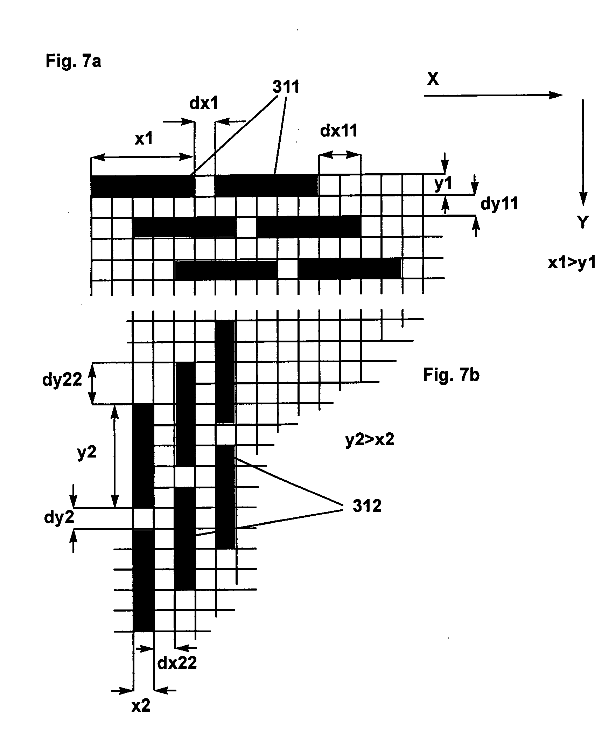

Fig. 7 jeweils Ausschnitte einer ersten und zweiten Schicht einer zweiten Ausführung der vorliegenden Erfindung;

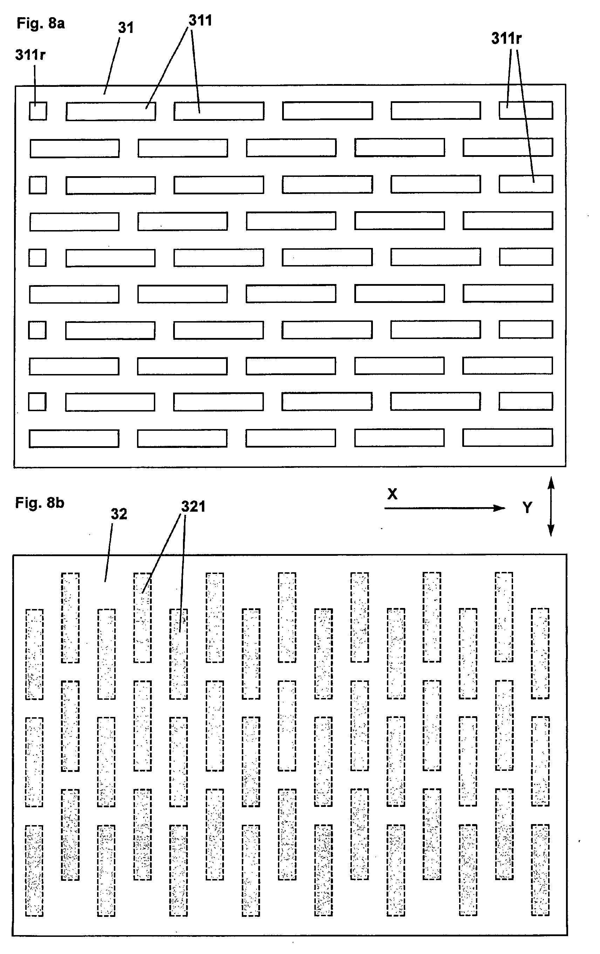

Fig. 8a und 8b eine erste und zweite Schicht der dritten Ausführung der vorliegenden Erfindung;

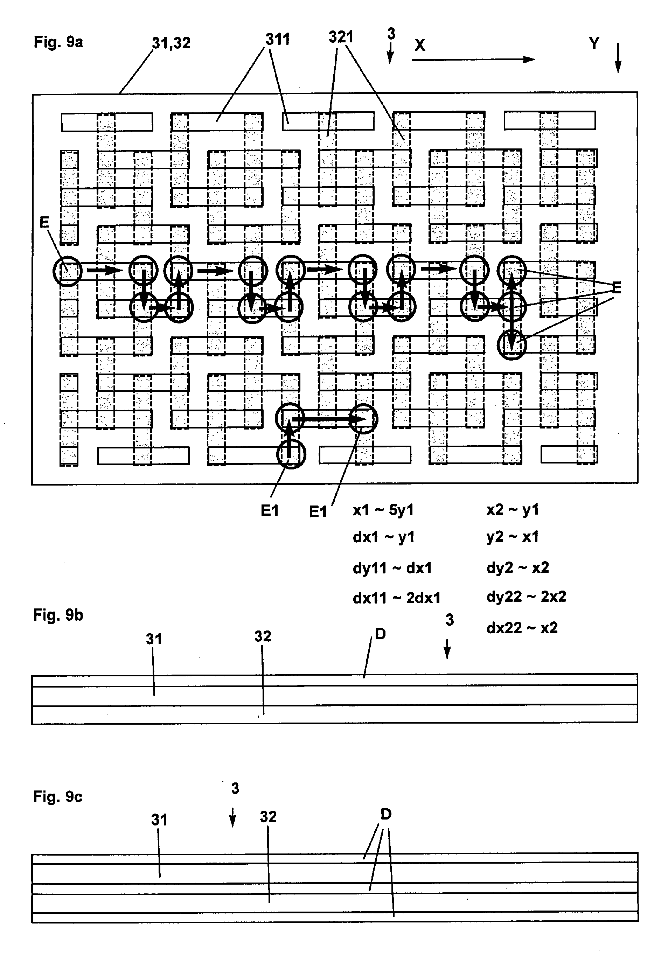

Fig. 9a eine dritte Ausführung der vorliegenden Erfindung mit den Schichten von Fig. 8a und 8b in der Draufsicht;

Fig. 9b eine Seitenansicht der Ausführung von Fig. 9a;

Fig. 9c eine Seitenansicht einer Abwandlung der Ausführung von Fig. 9a und 9b;

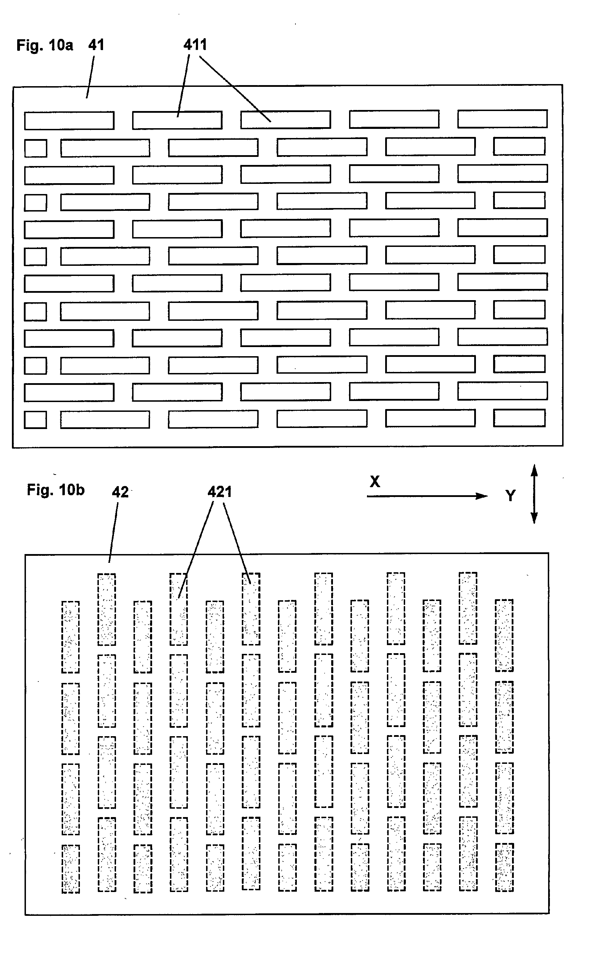

Fig. 10a und 10b eine erste bzw. zweite Schicht einer vierten Ausführung der vorliegenden Erfindung;

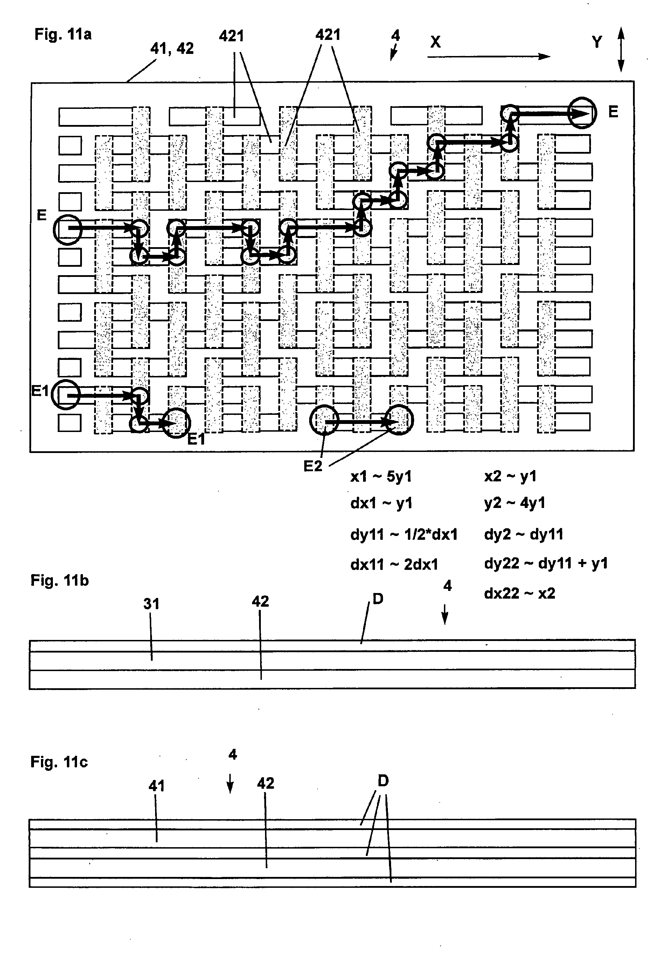

Fig. 11a eine vierte Ausführung der vorliegenden Erfindung mit den Schichten der Fig. 10a und 10b in der Draufsicht;

Fig. 11 eine Seitenansicht der Ausführung von Fig. 11a; und

Fig. 11c eine Seitenansicht einer Abwandlung der vierten Ausführung der vorliegenden Erfindung.

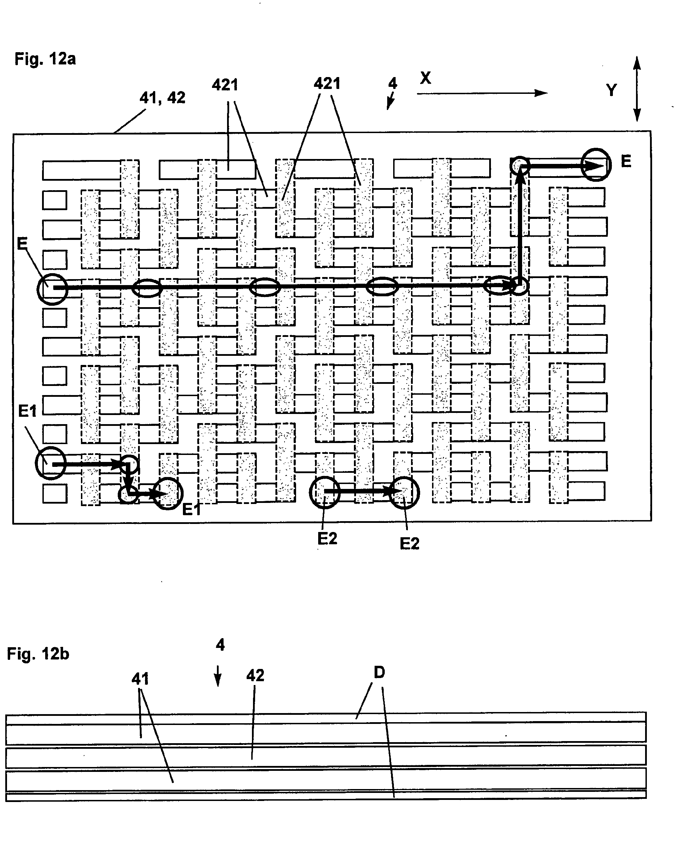

Fig. 12 eine weitere Darstellung der vierten Ausführung der vorliegenden Erfindung;

Fig. 12b eine Abwandlung der vierten Ausführung;

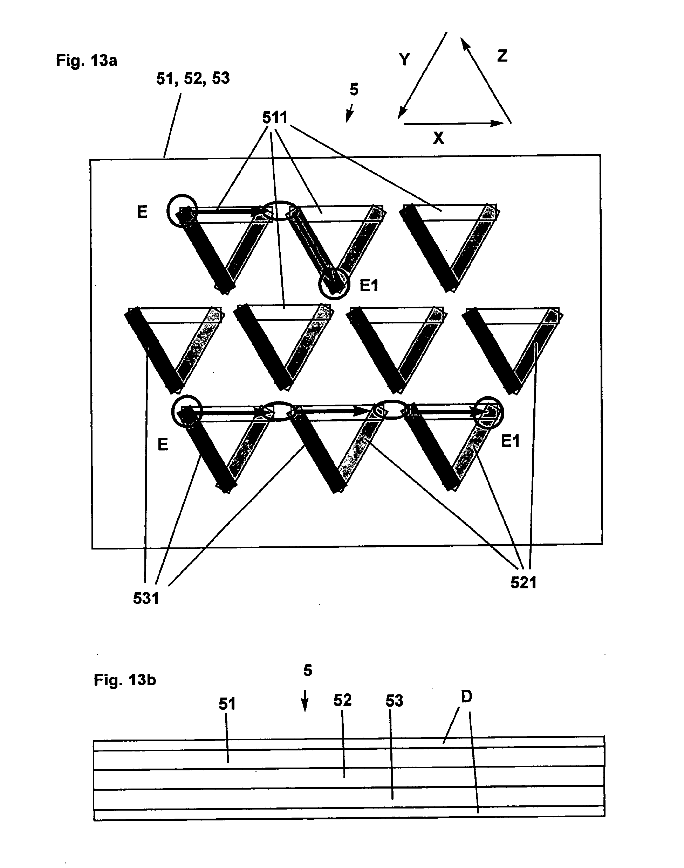

Fig. 13a und b eine fünfte Ausführung der vorliegenden Erfindung;

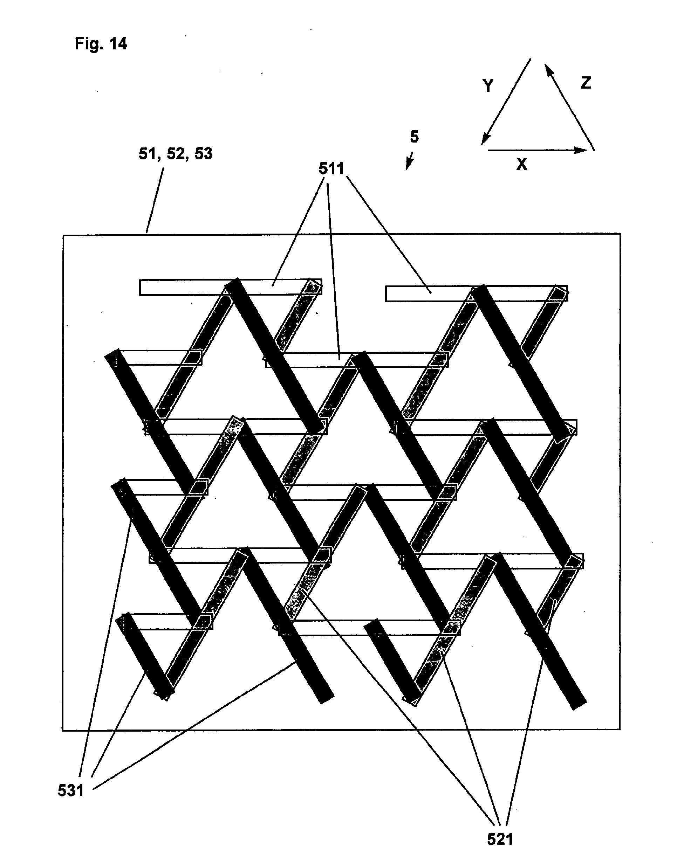

Fig. 14 eine Abwandlung der fünften Ausführung der vorliegenden Erfindung;

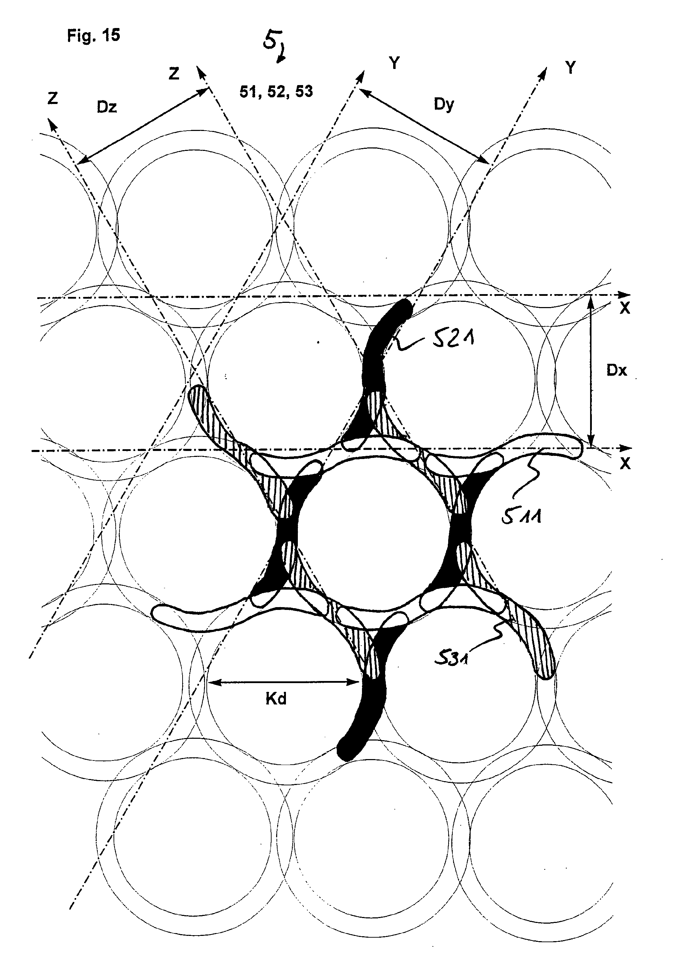

Fig. 15 eine weitere Abwandlung der fünften Ausführung der vorliegenden Erfindung;

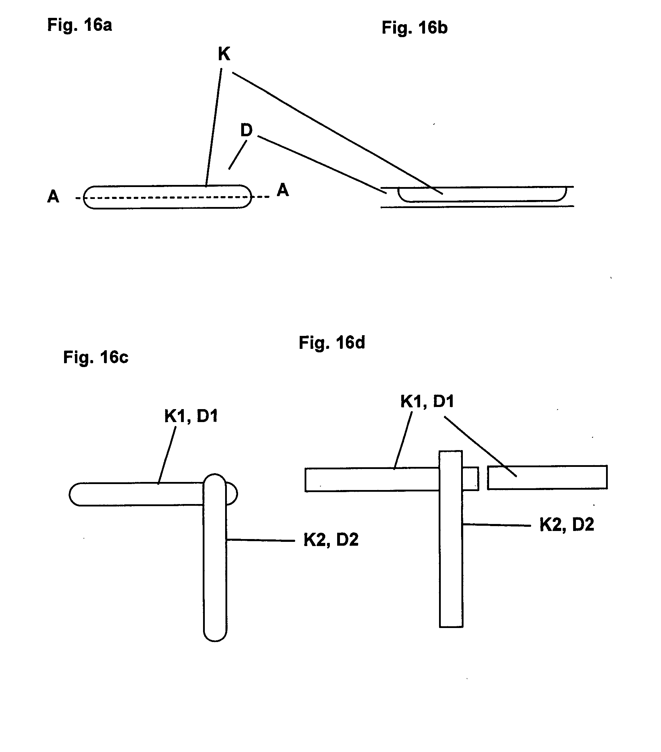

Fig. 16 a, b, c und d vorteilhafte Ausgestaltungen und Anordnungen von Kanälen in einer Schicht einer erfindungsgemäßen Verteilerpatte.

Die vorliegende Erfindung stellt insbesondere eine Verteilerplatte für Flüssigkeiten und/oder Gase bereit, die aus wenigstens einer Schicht besteht, wobei in der Schicht oder den Schichten eine Vielzahl von ersten länglichen Kanälen mit einer ersten geometrischen Ausbildung im wesentlichen in einer ersten Richtung ausgebildet ist, und außerdem eine Vielzahl von zweiten länglichen Kanälen mit einer zweiten geometrischen Ausbildung im wesentlichen in einer zweiten Richtung ausgebildet ist. Derartige Schichten können insbesondere wenn sie sehr kleine Abmessungen haben und dementsprechend miniaturisiert ausgebildete Kanäle haben auf einfache Weise und kostensparend beispielsweise aus Kunststoff mittels Abformung oder Spritzguß in großer Stückzahl vorgefertigt werden und gelagert werden. Im Bedarfsfall kann in einer derartigen Schicht auf einfache Weise mittels geeigneter Bohrungen in Zwischenräume zwischen nebeneinander angeordnete Kanäle mindestens ein erster und zweiter Kanal miteinander verbunden werden, wobei entsprechende Vorgaben durch den bestimmungsgemäßen Einsatz der Verteilerplatte auf ebenso einfache Weise berücksichtigt werden können.

Die vorliegende Erfindung stellt insbesondere außerdem eine Verteilerplatte für Flüssigkeiten oder Gase mit einer Schichtenfolge bereit, wobei die Schichtenfolge geeigneterweise aus einer ersten Schicht besteht, in der eine Vielzahl von ersten länglichen Kanälen mit einer ersten geometrischen Ausbildung im wesentlich in einer ersten Richtung ausgebildet ist und außerdem wenigstens aus einer zweiten Schicht besteht, in der eine Vielzahl von zweiten länglichen Kanälen mit einer zweiten geometrischen Ausbildung im wesentlichen in einer zweiten Richtung ausgebildet ist. Erfindungsgemäß werden wenigstens zwei Schichten der ersten und zweiten Schicht übereinander angeordnet, wobei mittels geeigneter Bohrungen in Zwischenräume übereinander und/oder nebeneinander angeordnete Kanäle der ersten und/oder zweiten Schicht mindestens ein erster und zweiter Kanal miteinander verbindbar sind. Auf diese Weise wird ebenso einfach erreicht, dass eine Flüssigkeit oder ein Gas von einer ersten Öffnung des ersten Kanals zu einer zweiten Öffnung des zweiten Kanals fließen kann. Auch das Verbinden mindestens eines ersten Eingangs mit mindestens einem Ausgang ist damit problemlos möglich. Die obige erste Schicht und die obige zweite Schicht können mittels Spritzguß oder Abformung auf einfache Weise in großer Stückzahl vorgefertigt werden und im

Bedarfsfall entsprechend zu einer mindestens zweischichtigen Verteilerplatte zusammengesetzt werden, wobei mittels Bohrungen an geeigneten Positionen, die durch den bestimmungsgemäßen Einsatz der Verteilerplatte vorgegeben sind, einfach, schnell und kostengünstig wenigstens ein Kanal bereitgestellt werden kann, der geeignet ist, eine Flüssigkeit oder ein Gas von wenigstens einer ersten Position zu wenigstens einer zweiten Position zu leiten.

Mittels einer erfindungsgemäßen Verteilerplatte ist es auf einfache Weise möglich, zwei oder mehr miniaturisiert ausgebildete Bauteile zu koppeln, so daß eine Flüssigkeit und/oder ein Gas von einem Bauteil in das andere Bauteil transportiert und gleichzeitig in das andere Bauteil verteilt werden kann.

Die vorliegende Erfindung stellt außerdem insbesondere eine Verteilerplatte für Flüssigkeiten und/oder Gase bereit, die geeignet ist, standardisiert ausgebildete Bauelemente eines modularen Systems miteinander zu koppeln, wobei die Verteilerplatte entsprechend den Standardisierungen und Normungen des modularen Systems ausgebildet ist. Dabei ist die Geometrie der Kanäle der Verteilerplatte an die entsprechenden Vorgaben des modularen Systems angepaßt. Die hierfür benötigten Öffnungen der Verteilerplatte werden ebenfalls entsprechend den Vorgaben des modularen Systems auf der Oberseite und/oder Unterseite der Verteilerplatte bereitgestellt. Dabei kann die Verteilerplatte für die Kopplung zweier Bauteile vorteilhaft zwischen die beiden Bauteile geschaltet sein.

Eine erfindungsgemäße Verteilerplatte ist ebenfalls besonders geeignet, Öffnungen lediglich eines Bauteils miteinander zu verbinden, oder zwei oder mehr Bauteile miteinander zu verbinden, die auf der Oberseite und/oder Unterseite der Verteilerplatte angeordnet sein können.

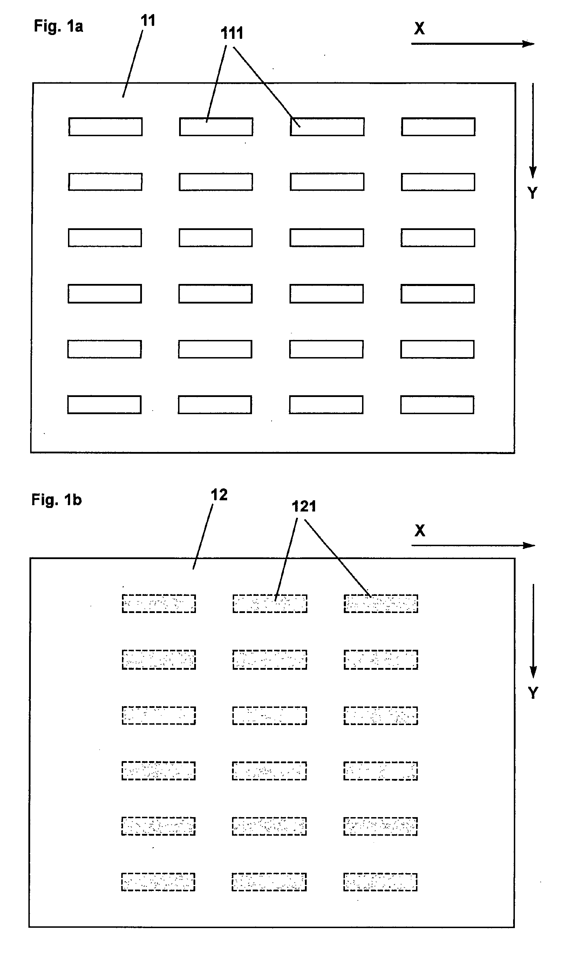

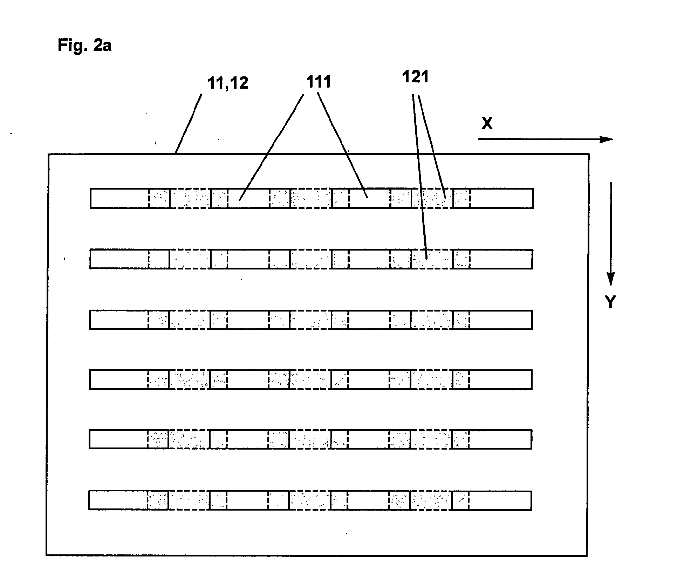

Fig. 1a und 1b zeigen eine erste Schicht 11 und eine zweite Schicht 12 eine ersten Ausführung der vorliegenden Erfindung. Die beiden Schichten 11 und 12 sind hier beispielhaft rechteckig ausgebildet und.haben geeigneter Weise ungefähr die gleiche Größe. Die erste Schicht 11 besteht aus einer Vielzahl von länglichen in einer ersten Richtung X angeordneten Kanälen 111, die in X-Richtung in Reihen hintereinander angeordnet sind, wobei die Abstände zwischen den Kanälen in den Reihen etwas kleiner als die Länge der Kanäle sind. Der Abstand zwischen den Reihen ist auch etwas kleiner als die Länge der Kanäle. Die zweite Schicht 12 besteht ebenfalls aus einer Vielzahl von länglichen Kanälen 121, die ebenfalls im wesentlichen in einer ersten Richtung X ausgebildet sind und in einer Vielzahl von Reihen in X-Richtung hintereinander angeordnet sind, wobei die Kanäle 121 der zweiten Schicht 12 erfindungsgemäß an Positionen auf der Schicht 12 angeordnet sind, die den Zwischenräumen zwischen zwei Kanälen 111 in X-Richtung der Schicht 11 entsprechen. Die Kanäle 111 der ersten Schicht 11 und die Kanäle 121 der zweiten Schicht 12 sind außerdem derart ausgebildet und positioniert, so dass bei Übereinanderanordnung der ersten und zweiten Schicht die Enden der Kanäle 121 und 111 sich überlappen, was in Fig. 2 dargestellt ist.

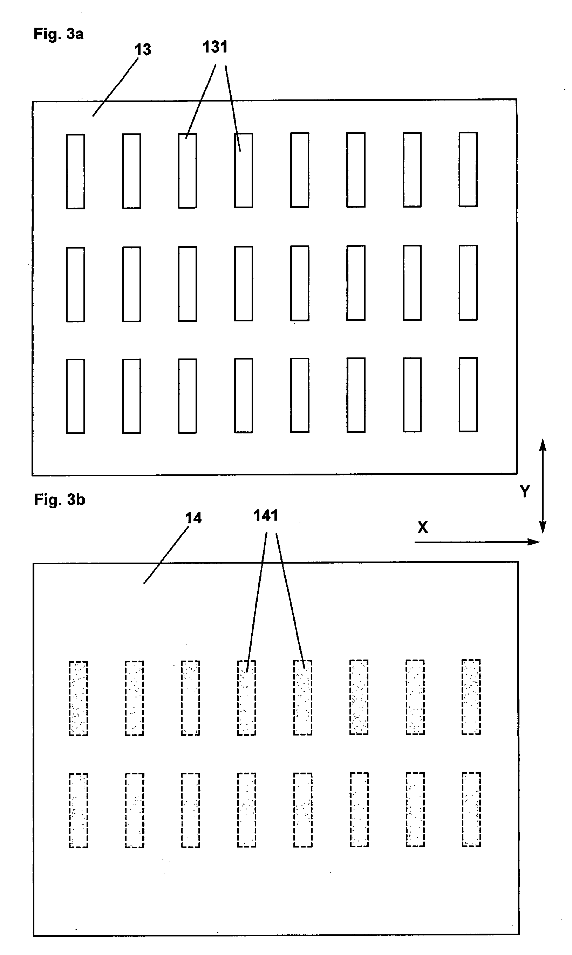

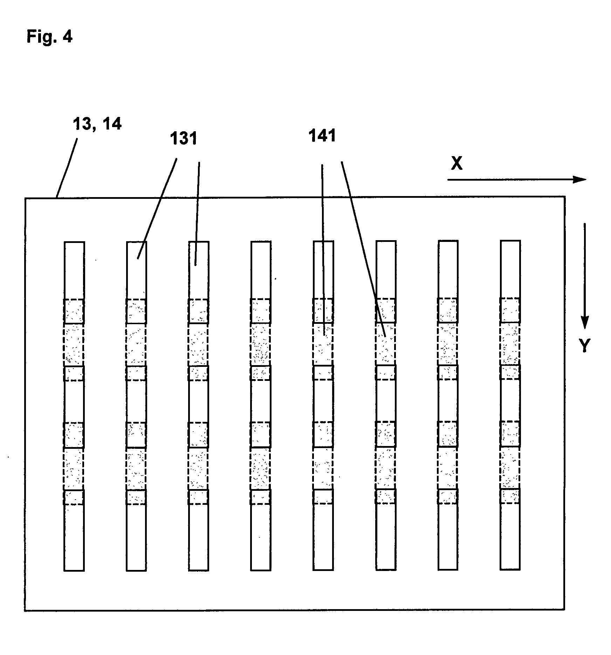

Fig. 3a und 3b zeigen eine dritte Schicht 13 und eine vierte Schicht 14 der ersten Ausführung der vorliegenden Erfindung, die analog zu den oben beschriebenen Schichten 11 und 12 ausgebildet sind, mit dem Unterschied, dass die Kanäle 131 und 141 im wesentlichen in einer zweiten Richtung Y ausgebildet sind, die sich von der ersten Richtung X unterscheidet. Geeigneterweise schließen die erste Richtung X und die zweite Richtung Y einen Winkel von 90° ein. Fig. 4 zeigt die übereinander angeordneten Schichten 13 und 14 mit den Kanälen 131 und 141, die sich ebenso wie die Kanäle 111 und 121 jeweils an ihren Enden überlappen und außerdem jeweils über Zwischenräumen zwischen zwei Kanälen der anderen Schicht angeordnet sind.

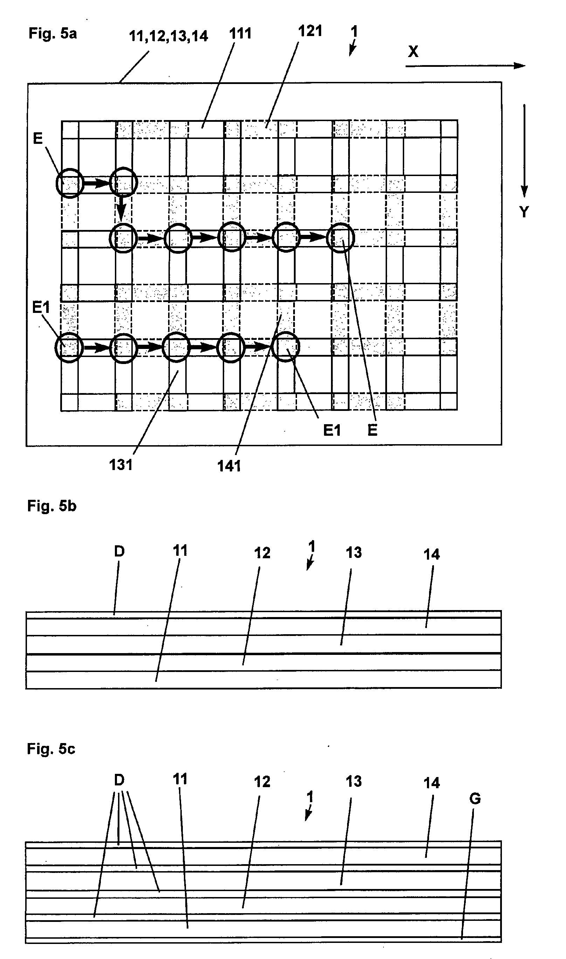

Die Kanäle 131 und 141 der dritten und vierten Schicht sind außerdem derart in den Schichten 13 bzw. 14 angeordnet, dass wenn die Schichten 11, 12, 13 und 14 übereinander angeordnet sind, die Enden der Kanäle 131 und 141 die Enden der Kanäle 111 und 121 überlappen. Fig. 5a zeigt eine Draufsicht auf die übereinander angeordneten Schichten 11, 12, 13 und 14, wobei erfindungsgemäß die Kanäle in den Schichten derart ausgebildet und angeordnet sind, dass die Projektion der Kanäle auf eine Ebene eine Raster ergibt, das eine Vielzahl gleich großer Flächen begrenzt. Fig. 5a zeigt außerdem jeweils vorbestimmte Punkte E, E und E1, E1, die durch die Ausbildung von geeigneten Bohrungen durch die entsprechenden Schichten 11, 12, 13 und 14, die in der Zeichnung symbolisch kreisförmig dargestellt sind, über die Kanäle 111, 121, 131, 141 verbunden werden können, wodurch ein Flüssigkeitskanal jeweils zwischen den Positionen E, E und E1, E1 bereitgestellt ist, der in der Zeichnung jeweils mit Pfeilsymbolen dargestellt ist. Die Schichten 11, 12, 13 und 14 mit den Kanälen 111, 121, 131 und 141 sind erfindungsgemäß derart ausgebildet und angeordnet, dass auf die oben beschriebene Weise eine Vielzahl von Positionen E, E und E1, E1 mittels geeigneter Bohrungen in die Schichtenfolge 11, 12, 13 und 14 über die Kanäle 111, 121, 131 und 141 miteinander verbindbar sind.

Die Bohrungen werden dabei entsprechend den Vorgaben der zu verbindenden Positionen von oben oder unten durch wenigstens zwei der vier Schichten geführt. Bei dieser Ausführung der vorliegenden Erfindung kann außerdem die Schichtenfolge entsprechend den Vorgaben der zu verbindenden Positionen variiert werden, und/oder es kann auch wenigstens eine der Schichten 11, 12, 13, 14 weggelassen werden oder durch eine andere Schicht 11, 12, 13, 14 ersetzt sein, die dann mehrfach in der Schichtenfolge vorkommt. Beispielsweise kann eine erfindungsgemäße Verteilerplatte bei entsprechenden zu verbindenden Positionen auch lediglich zwei Schichten 11, 12 umfassen.

Die Kanäle 111, 121, 131 und 141 in den Schichten 11, 12, 13 und 14 können außerdem derart ausgebildet sein, dass die Kanäle in der Oberseite der Schichten bis zu einer Tiefe ausgebildet sind, die geringer ist als die Schichtdicke, wobei die Schichten 11, 12, 13 und 14 direkt übereinander angeordnet werden können, wobei die Oberseite einer Schicht von dem Boden der darüberliegenden Schicht abgedeckt ist, und die Kanäle zwischen zwei Schichten eingeschlossen sind.

Fig. 5b zeigt eine erste erfindungsgemäße Verteilerplatte 1 mit direkt übereinander angeordneten Schichten 11, 12, 13 und 14, wobei die oberste Schicht 14 außerdem mit einer dünnen Deckfolie D abgedeckt sein kann. Geeigneter Weise sind die Schichten 11, 12, 13 und 14 und die Deckschicht D mittels Wärme, Druck oder Klebstoff miteinander verbunden, so dass die Kanäle 111, 121, 131 und 141 flüssigkeits- und gasdicht in der Verteilerplatte 1 eingeschlossen sind. Dabei hat geeigneter Weise die Deckfolie D eine Dicke, die einen hinreichenden Einschluß der Kanäle gewährleistet und außerdem genügend dünn ist, um z. B. mittels Laserablation oder mechanischen oder thermischen Mitteln auf einfache Weise Bohrungen durch die Deckschicht D vornehmen zu können. Dementsprechend ist auch die Tiefe der Kanäle 111, 121, 131 und 141 in die Schichten 11, 12, 13, 14 gewählt.

Fig. 5c zeigt eine Abwandlung der Verteilerplatte 1 von Fig. 5b, bei der die Kanäle 111, 121, 131 und 141 durch die Schichten 11, 12, 13 und 14 hindurchgehend ausgebildet sind, wobei zwischen benachbarter Schichten eine Zwischensicht D angeordnet ist, die die Kanäle abdeckt und außerdem unter der untersten Schicht eine Grundschicht G angeordnet ist. Die Dicke der Zwischenschichten D sind ebenso wie die Deckschicht D und Grundschicht G derart ausgewählt, dass auf einfache Weise Bohrungen in die Schichten D und G vorgenommen werden können und die Kanäle flüssigkeits- und gasdicht abgeschlossen sind. Außerdem kann bei entsprechenden Vorgaben der zu verbindenden Positionen auch wenigstens eine der Zwischenschichten D und vorzugsweise die Zwischenschicht D zwischen den mittleren Schichten 12 und 13 weggelassen werden, wobei dann die mittleren Schichten 12 und 13 an vorbestimmten Positionen miteinander verbunden sind.

Eine erfindungsgemäße Verteilerplatte, bestehend aus wenigstens zwei übereinander angeordneten Schichten gemäß der oben anhand von Fig. 5b und 5c beschriebenen Verteilerplatte ist besonders geeignet für eine Bereitstellung der Bohrungen mittels Laserablation von Material zwischen zwei übereinander angeordneten Kanälen, da hierfür nur ein geringer Lasereinsatz erforderlich ist. Dies gilt auch für die nachfolgend beschriebenen Ausführungen mit wenigstens zwei Schichten, während für eine Laserablation von Material zwischen in einer Schicht nebeneinander angeordneten Kanälen ein erhöhter Lasereinsatz benötigt wird.

Fig. 6a zeigt eine zweite Ausführung der vorliegenden Erfindung, bei der in einer Schicht 21 eine Vielzahl von länglichen Kanäle 211 in einer ersten Richtung X ausgebildet ist und außerdem eine Vielzahl von zweiten länglichen Kanäle 212 in einer zweiten Richtung Y ausgebildet ist. Die Kanäle 211 und 212 in der Schicht 21 sind geeigneter Weise derart angeordnet, dass eine Vielzahl gleich großer Flächen jeweils von zwei gegenüberliegenden Kanälen 211 und zwei gegenüberliegenden Kanälen 212 eingeschlossen wird, und die Kanäle an ihren Enden derart voneinander beabstandet sind, dass auf einfache Weise mittels Laserablation oder mechanischen oder thermischen Mitteln eine Verbindung zwischen einem ersten Kanal 211 oder einem zweiten Kanal 211 oder einem ersten Kanal 212 und einem zweiten Kanal 212 oder einem ersten Kanal 211 und einem zweiten Kanal 212 bereitgestellt werden kann. Geeigneter Weise schließen die Richtung X und die Richtung Y einen Winkel von 90° ein. Es ist klar, dass auch ein anderer Winkel zwischen den beiden Richtungen X und Y von Vorteil sein kann, wie beispielsweise ein Winkel von 60°, wobei die Kanäle 211 und 211 dann entsprechend derart ausgebildet und angeordnet sind, dass jeweils zwei gegenüberliegende Kanäle 211 und 212 eine rautenförmige Fläche einschließen.

Fig. 6b zeigt einen Ausschnitt einer vorteilhaften Abwandlung von Fig. 6a, die zusätzlich zu den länglichen Kanälen 211, 212 eine Vielzahl von Ausnehmungen 213 aufweist, die geeigneter Weise gegenüber den jeweiligen Enden der Kanäle 211, 212 angeordnet sind. Durch diese Anordnung der Kanäle 211, 212 und der Ausnehmungen 213 kann auf einfache Weise mittels z. B: Laserablation eine Verbindung zwischen wenigstens zwei Kanälen 211, 211 oder 212, 212 oder 211, 212 bereitgestellt werden, indem die jeweilige Zwischenwand zwischen dem Kanal 211, 212 und der Ausnehmung 213 entfernt wird.

Fig. 6c zeigt einen Ausschnitt einer weiteren vorteilhaften Abwandlung der Ausführung von Fig. 6a, deren längliche Kanäle in der ersten X und zweiten Y Richtung 211 bzw. 212 alternierend bogenförmig ausgebildet sind.

Eine Verteilerplatte gemäß einer zweiten Ausführung der vorliegenden Erfindung besteht aus der Schicht 21, über der eine dünne Deckfolie angeordnet sein kann und auch eine zusätzliche Grundschicht haben kann. Dabei sind die Kanäle 211, 212 in der Schicht 21 bis zu einer vorbestimmten Tiefe ausgebildet bzw. durch die Schicht 21 hindurchgehend ausgebildet. Die Deckschicht und die Grundschicht haben eine Dicke, die es gestattet, auf einfache Weise mittels Laser und mechanischen oder thermischen Mitteln Bohrungen in die Schichten vorzunehmen und außerdem ein zuverlässiges Einschließen der Kanäle zu 211, 212 gewährleisten. In Fig. 6a sind beispielhaft geeignete Bohrungen dargestellt, die geeignet sind, die Positionen E, E und E1, E1 und E2, E2 über die Kanäle 211, 212 miteinander zu verbinden.

Fig. 8a zeigt eine Draufsicht auf eine Schicht 31 einer dritten Ausführung der vorliegenden Erfindung, und Fig. 7a zeigt einen Ausschnitt der Schicht 31 von Fig. 8a. Die Schicht 31 ist beispielhaft rechteckig ausgebildet und in der Schicht 31 sind erste längliche Kanäle 311 im wesentlichen in einer ersten Richtung X angeordnet. Die ersten länglichen Kanäle haben eine erste Länge x1 und eine erste Breite y1 und eine Vielzahl der ersten Kanäle sind in der ersten Richtung X in einer Vielzahl von Reihen angeordnet, wobei die Kanäle 311 in den Reihen mit gleichbleibendem ersten Abstand dx1 angeordnet sind, und wobei zwei benachbarte Reihen in der ersten Richtung X um einen ersten Verschiebungsbetrag dx11 gegeneinander verschoben sind und zwei benachbarte Reihen in einer zweiten Richtung Y einen ersten Reihenabstand dy11 haben.

Fig. 8b zeigt eine Draufsicht auf eine zweite Schicht 32 der dritten Ausführung der vorliegenden Erfindung und Fig. 7b zeigt einen Ausschnitt der Schicht 32 von Fig. 8b. In der Schicht 32 sind zweite längliche Kanäle 321 mit einer zweiten Länge y2 und einer zweiten Breite x2 ausgebildet und die Kanäle sind in der zweiten Richtung Y in einer Vielzahl von Reihen angeordnet, wobei die Kanäle in den Reihen mit gleichbleibendem zweiten Abstand dy2 hintereinander angeordnet sind, und wobei zwei benachbarte Reihen in der zweiten Richtung Y um einen zweiten Verschiebungsbetrag dy22 gegeneinander verschoben sind und zwei benachbarte Reihen in der ersten Richtung X einen zweiten Reihenabstand dx22 haben. Die zweite Schicht 32 ist geeigneter Weise gleich groß wie die erste Schicht 31, und die Kanäle 311 der ersten Schicht 31 und die Kanäle 321 in der zweiten Schicht 32 sind geeigneter Weise geometrisch gemäß der folgenden Gleichung G1 ausgebildet:

$$x1 = 3 \, y1 + 2 \, dy11 + dx11 ; \qquad (G1)$$

Die Kanäle 311 der ersten Schicht 31 und die Kanäle 321 der zweiten Schicht 32 sind außerdem geeignet Weise wie folgt ausgebildet:

Die erste Länge x1 der ersten Kanäle 311 entspricht der zweiten Länge y2 der zweiten Kanäle 321; die erste Breite y1 der ersten Kanäle 311 entspricht der zweiten Breite x2 der zweiten Kanäle 321; der erste Abstand dx1 zwischen den ersten Kanälen 311 entspricht dem zweiten Abstand dy2 zwischen den zweiten Kanälen 321; der erste Verschiebungsbetrag dx11 der Reihen in der ersten Schicht 31 entspricht dem zweiten Verschiebungsbetrag dy22 der Reihen der zweiten Schicht 32; die erste Breite y1 der ersten Kanäle 311 entspricht dem ersten Reihenabstand dy11 der ersten Schicht 31, die erste Breite y1 der ersten Kanäle 311 entspricht dem ersten Abstand dx1 der ersten Kanäle 311; und der erste Verschiebungsbetrag dx11 der Reihen der ersten Schicht 31 ist ungefähr doppelt so groß wie der erste Abstand dx1 und der zweite Verschiebungsbetrag dy22 ist ungefähr doppelt so groß wie der zweite Abstand dy2 der zweiten Kanäle 321.

Die Kanäle 311 der ersten Schicht 31 und die Kanäle 321 der zweiten Schicht 32 sind erfindungsgemäß derart in den Schichten 31 und 32 angeordnet, dass wenn die Schichten 31 und 32 übereinander angeordnet sind, die beiden Enden eines ersten Kanals 311 einen mittleren Bereich zweier Kanäle 321 überlappen und gleichzeitig ein mittlerer Bereich des ersten Kanals 311 ein Ende eines dritten Kanals 321 überlappt, und die beiden Enden eines Kanals 321 in der zweiten Schicht 32 jeweils mittlere Bereiche zweier Kanäle 311 in der Schicht 31 überlappen und gleichzeitig der mittlere Bereich des Kanals 321 ein Ende eines dritten Kanals 311 in der Schicht 31 überlappt. Außerdem ist die erste Länge x1 der ersten Kanäle 311 und die zweite Länge y2 jeweils ungefähr 5 x so groß wie die erste Breite y1 bzw. die zweite Breite x2.

Zwei entsprechend übereinander angeordnete Schichten 31 und 32, die außerdem mit einer Decksicht D versehen sein können, bilden die Verteilerplatte 3 der dritten Ausführung der vorliegenden Erfindung, die in der Fig. 9b dargestellt ist, wobei die Kanäle 311 und 321 bis zu einer Tiefe in die jeweilige Schicht ausgebildet sind, die geringer als die Schichtdicke ist. In die erfindungsgemäße Verteilerplatte 3 können auf ebenso einfache Weise wie in die zuvor beschriebene Verteilerplatte 1 und 2 der ersten und zweiten Ausführung der vorliegenden Erfindung geeignete Bohrungen vorgenommen werden, um Bereiche E, E und E1, E2 mittels der Kanäle 311, 321 zu verbinden, was in Fig. 9a dargestellt ist. Dies geschieht analog zu den oben beschriebenen Ausführungen 1 und 2, weshalb auf eine weitere Ausführung hier verzichtet wird und statt dessen auf die entsprechenden Passagen der Beschreibung der Ausführung 1 und 2 verwiesen wird.

Fig. 9c zeigt eine Abwandlung der Verteilerplatte 3 von Fig. 9b, die entsprechend der in Fig. 5c dargestellten Verteilerplatte 1 und oben beschriebenen Verteilerplatte 1 abgewandelt ist, weshalb hier ebenfalls auf eine Beschreibung verzichtet wird und statt dessen auf die obige Passage verwiesen wird.

Fig. 10a und 10b zeigen eine erste Schicht 41 und eine zweite Schicht 42 einer Verteilerplatte 4 gemäß einer vierten Ausführung der vorliegenden Erfindung, wobei die Geometrie der Kanäle 411, 421 in der ersten und zweiten Schicht 41, 42 ebenfalls der obigen Gleichung G1 genügt. Die erste Schicht 41 mit den Kanälen 411 und die zweite Schicht 42 mit den Kanälen 421 entsprechen außerdem der ersten Schicht 31 mit den Kanälen 311 bzw. der zweiten Schicht 32 mit den Kanälen 321 der dritten Ausführung der vorliegenden Erfindung mit den folgenden Unterschieden:

Der erste Reihenabstand dy11 der ersten Schicht 41 ist ungefähr halb so groß wie der erste Abstand dx1 der Kanäle 411; die erste Länge y2 der Kanäle 421 der zweiten Schicht 42 ist ungefähr vier mal so groß wie die erste Breite y1 der ersten Kanäle 411 in der ersten Schicht 41; der Abstand dy2 der zweiten Kanäle 421 in der zweiten Schicht 42 entspricht ungefähr dem ersten Reihenabstand dy11 der ersten Schicht 41; und der zweite Verschiebungsbetrag dy22 zweier benachbarter Reihen der zweiten Schicht 42 entspricht ungefähr der Summe des ersten Reihenabstandes dy11 und der ersten Breite y1 der Kanäle 411 der ersten Schicht 41.

Fig. 11a zeigt eine Draufsicht auf die übereinander angeordneten Schichten 41 und 42 mit Bohrungen, um entsprechende Bereiche E, E und E1, E1 und E2, E2 mittels der Kanäle 421 und 411 zu verbinden, und Fig. 11b und 11c zeigen eine erfindungsgemäße Verteilerplatte 4, eine Abwandlung der oben anhand der Fig. 9a, 9b und 9c beschriebenen Verteilerplatte 3, und weshalb hier auf eine weitere Beschreibung verzichtet wird und statt dessen auf die entsprechende obige Passage verwiesen wird.

Fig. 12a zeigt eine Draufsicht auf die übereinander angeordneten Schichten 41, 42 mit den Kanälen 421 bzw. 422, wobei ebenfalls vorher bestimmte Bereiche E, E und E1, E1 und E2, E2 mittels geeigneter Bohrungen über die Kanäle 421 und 422 verbunden sind, wobei jedoch die Bohrungen zur Bereitstellung der Verbindung der Bereiche E, E im Unterschied zu den Bohrungen der Fig. 11a nicht nur übereinander angeordnete Kanäle miteinander verbinden, sondern auch in einer Schicht hintereinander angeordnete Kanäle verbinden, wobei erfindungsgemäß die Positionierung und Auswahl der Bohrungen zur Verbindung von vorbestimmten Bereichen E, E dahingehend optimiert ist, dass ein kleinster Verbindungskanal zwischen den Bereichen E, E bereitgestellt ist.

Fig. 12b zeigt eine vorteilhafte Abwandlung der vierten Ausführung, bei der eine zweite Schicht 42 zwischen zwei erste Schichte 41 angeordnet ist, die besonders geeignet ist, um z.B: zwei gleichartige Bauteile zu koppeln, indem die Verteilerplatte 4 zwischen den Bauteilen angeordnet wird.

Fig. 13a und b zeigen eine fünfte Ausführung der vorliegenden Erfindung, nämlich eine Verteilerplatte 5 bestehend aus den übereinander angeordneten Schichte 51, 52 und 53. In der ersten, zweiten und dritten Schicht 51, 52 und 53 sind jeweils erste, zweite und dritte längliche Kanäle 511, 521 und 531 mit vorbestimmter Länge und vorbestimmten Abstand im wesentlichen jeweils in einer ersten, zweiten und dritten Richtung X, Y und Z ausgebildet, wobei erfindungsgemäß jeweils zwei der Richtungen X, Y, Z einen Winkel von 60 Grad einschließen, und bei übereinander angeordneten Schichten 51, 52 und 52 die Enden der Kanäle einer Schicht 51, 52, 53 jeweils über bzw. unter den Enden eines Kanals der beiden anderen Schichten angeordnet sind.

In der Verteilerplatte 5 können ebenso wie bei den oben beschriebenen Ausführungen 1 bis 4 auf einfache Weise Bohrungen und Öffnungen E, E1 bereitgestellt werden, weshalb hier auf eine weitere Beschreibung verzichtet wird und statt dessen auf die jeweiligen obigen Passagen verwiesen wird.

Fig. 14 zeigt eine Verteilerplatte 5 einer vorteilhaften Abwandlung der fünften Ausführung der vorliegenden Erfindung, die ebenfalls aus einer ersten, zweiten und dritten Schicht 51, 52 und 53 besteht, in denen jeweils erste, zweite und dritte längliche Kanäle 511, 521 und 531 mit vorbestimmter Länge und vorbestimmtem Abstand im wesentlichen jeweils in einer ersten, zweiten und dritten Richtung X, Y und Z ausgebildet sind, und wobei jeweils zwei der Richtungen X, Y, Z einen Winkel von 60° einschließen. Im Unterschied zu der anhand von Fig. 13 beschriebenen Verteilerplatte 5 sind die Kanäle 511, 521 und 531 in den Schichten 51, 52 und 53 hier vorteilhaft so ausgebildet, daß bei übereinander angeordneten Schichten 51, 52 und 53 ein erstes Ende eines ersten Kanals 511, 521, 531 in einer ersten Schicht 51, 52, 53 sich mit einem Ende eines zweiten Kanals 511, 521, 531 in einer zweiten Schicht 51, 52, 53 und mit einem mittleren Bereich eines dritten Kanals 511, 521, 531 in einer dritten Schicht 51, 52, 53 überlappt; und außerdem ein zweites Ende des ersten Kanals 511, 521, 531 in der ersten Schicht 51, 52, 53 sich mit einem Ende eines vierten Kanals 511, 521, 531 in der dritten Schicht 51, 52, 53 und mit einem mittleren Bereich eines fünften Kanals 511, 521, 531 in der zweiten Schicht 51, 52, 53 überlappt; und außerdem ein mittlerer Bereich des ersten Kanals 511, 521, 531 in der ersten Schicht 51, 52, 53 sich mit einem Ende eines sechsten und siebten Kanals 511, 521, 531 in der zweiten bzw. dritten Schicht überlappt. Außerdem schließen drei gegenüberliegende Kanäle 511, 521 und 531 der Verteilerplatte 5 gemäß Fig. 13 und 14 jeweils die Fläche eines gleichseitigen Dreiecks ein.

Fig. 15 zeigt einen Ausschnitt einer Verteilerplatte 5, eine weitere vorteilhafte Abwandlung der fünften Ausführung der vorliegenden Erfindung, die ebenfalls aus einer ersten, zweiten und dritten Schicht 51, 52 und 53 besteht, in denen jeweils erste, zweite und dritte längliche Kanäle 511, 521 und 531 mit vorbestimmter Länge und vorbestimmtem Abstand im wesentlichen in einer ersten, zweiten und dritten Richtung X, Y und Z ausgebildet sind, und wobei jeweils zwei Richtungen X, Y, Z einen Winkel von 60° einschließen. Im Unterschied zu den anhand von Fig. 13 und 14 beschriebenen Verteilerplatten 5 sind die Kanäle 511, 521 und 531 in den Schichten 51, 52 und 53 hier vorteilhaft derart gebogen ausgebildet, daß bei übereinander angeordneten Schichten 51, 52 und 53 die beiden Enden eines ersten Kanals 511, 521, 531 in einer ersten Schicht 51, 52, 53 sich jeweils mit einem ersten mittleren Bereich eines zweiten Kanals 511, 521, 531 bzw. dritten Kanals 511, 521, 531 in einer zweiten Schicht 51, 52, 53 überlappt; und außerdem ein erster und zweiter mittlerer Bereich des ersten Kanals 511, 521, 531 in der ersten Schicht 51, 52, 53 jeweils mit einem vierten und fünften Kanal 511, 521, 531 in einer dritten Schicht überlappt, wobei der zweite und dritte Kanal 511, 521, 531 in der zweiten Schicht im wesentlichen einander gegenüberliegend angeordnet sind, und der vierte und fünfte Kanal 511, 521, 531 in der dritten Schicht im wesentlichen hintereinander angeordnet sind. Die Kanäle 511, 521, 531 in den Schichten 51, 52, 53 sind erfindungsgemäß außerdem derart angeordnet und ausgebildet, daß jeweils zwei gegenüberliegende Kanäle 511, 511 und 521, 521 und 531,531 der ersten und zweiten und dritten Schicht 51, 52, 53 im wesentlichen eine Kreisfläche mit einem Durchmesser Kd einschließen, der im wesentlichen einem Reihenabstand Dx, Dy, Dz der Kanäle 511, 521, 531 entspricht, die aufeinanderfolgend in der ersten bzw. zweiten bzw. dritten Richtung X, Y, Z angeordnet sind.

In einer erfindungsgemäßen vorstehend beschriebenen Verteilerplatte 5 gemäß Fig. 15 können auf besonders einfache Weise von oben oder unten an geeigneten Positionen Bohrungen mittels Laserablation vorgenommen werden, so daß jeweils ein Kanal einer mittleren Schicht 51, 52, 53 mit einem Kanal einer oberen oder unteren Schicht 51, 52, 53 verbunden ist, da hierfür im Vergleich zu einer Laserablation von Wänden zwischen in einer Schicht angeordneten Kanälen besonders wenig Energie benötigt wird. Es ist klar, daß dieser Vorteil auch für die oben beschriebenen entsprechenden Ausführungen der vorliegenden Erfindung gilt.

Fig. 16a zeigt eine Draufsicht auf einen vorteilhaft ausgebildeten Kanal K einer Schicht D, und Fig. 16b zeigt einen Schnitt durch den Kanal K von Fig. 16a entlang der Linie A-A, dessen Enden gerundet sind, was strömungstechnisch besonders günstig ist.

Fig. 16c und d zeigen jeweils einen Kanal K1 einer Schicht D1 und einen Kanal K2 einer Schicht D2, die sich an den Enden vorteilhaft derart überlappen, daß das Ende eines Kanals K1, K2 jeweils geringfügig über den andere Kanal K1, K2 hinausragt. Diese Konfiguration ist einerseits besonders vorteilhaft bei Kanälen mit abgerundeten Enden gemäß Fig. 16a und b und andererseits besonders vorteilhaft für die vorstehend beschriebenen Ausführungen der vorliegenden Erfindung, bei denen sowohl hintereinander angeordnete Kanäle einer Schicht als auch übereinander angeordnete Kanäle verschiedener Schichten mittels geeigneter Bohrungen verbindbar sind, wobei hierdurch sichergestellt ist, daß Bohrungen zur Verbindung hintereinander angeordneter Kanäle in einer Schicht nicht außerdem eine unbeabsichtigte Verbindung zu einem Kanal in einer anderen Schicht verursachen. Es ist klar, daß derartige Bohrungen, die auch mehrere Kanäle in einer oder mehr Schichten verbinden, andererseits auch beabsichtigt sein können. Die vorstehend beschriebenen günstigen Ausgestaltungen und Anordnungen der Kanäle gemäß Fig. 16a bis d können bei allen oben beschriebenen entsprechenden mehrschichtigen Ausführungen der vorliegenden Erfindung vorteilhaft eingesetzt werden.

Es ist klar, daß die Schichtenfolge der Schichten 51, 52 und 53 ebenso wie die Bohrungen und Öffnungen zum Ankoppeln, die jeweils von oben und/oder unten ausgeführt sein können, an die zu verbindenden Bauteile angepaßt sind. Es ist auch klar, daß zwischen den Schichten 51, 52 und 53 jeweils eine Zwischenschicht angeordnet sein kann, auf deren Zeichnung hier verzichtet wurde und auf die entsprechenden Zeichnungen der obigen Ausführung verwiesen wird.

Die vorliegende Erfindung stellt außerdem ein Verfahren bereit mittels dem auf einfache und kostensparende Weise eine Verteilerplatte für Flüssigkeiten hergestellt werden kann. Nach dem erfindungsgemäßen Verfahren werden eine Vielzahl von geeigneten oben beschriebenen Schichten 11, 12, 13, 14; 21; 31, 32; 41; 42 ; 51 ; 52; 53 vorproduziert und auf Lager bereitgehalten; Hieraus wird wenigstens eine Schicht ausgewählt und geeignet angeordnet und an vorbestimmten Positionen geeignete Bohrungen in die Schicht bzw. Schichtenfolge ausgebildet, so daß wenigstens ein Flüssigkeitskanal bereitgestellt ist. Nach geeigneter Weise senkrecht zur Schicht ausgebildeten Bohrungen werden die Bohrungen versiegelt, was beispielsweise durch Aufbringen einer dünnen Deckschicht geschehen kann, wobei klar ist, daß in der Deckschicht und/oder von unten entsprechende Flüssigkeits Ein-und Ausgänge ausgebildet sind.

Die oben beschriebene Erfindung eignet sich insbesondere zur Herstellung von Verteilerplatten mit Kanälen von sehr kleinen Abmessungen in den Bereichen:

> Verteilerplatte mit Länge von 5 mm bis 200 mm, Breite von 5 mm bis 200 mm, Dicke je Schicht von 0,02 mm bis 5 mm; und Kanäle mit Länge von 1 mm bis 100 mm, Breite von 0,1 mm bis 5 mm, Tiefe von 0,01 mm bis 5 mm, die kostensparend unter Verwendung von Mikrotechniken in großen Stückzahlen hergestellt werden können.

Es ist klar, daß je nach Vorgabe auch Verteilerplatten bestehend aus einer geeigneten Kombination wenigstens zweier übereinander angeordneter Schichten der obigen ersten bis fünften Ausführung vorteilhaft sein kann, wobei die Bohrungen zur Bereitstellung von geeigneten Verbindungen der Kanäle von oben und/oder unten ausführbar sind, und wobei nach der Bereitstellung der Bohrungen diese mit eine dünnen Folie abgedeckt werden, und in die Ober- und/oder Unterseite der Verteilerplatte an vorbestimmten Positionen E, E1 ebenfalls mittels Laserablation, etc. Öffnungen zur Ankopplung bereitgestellt werden.

**Patentansprüche**

1. Verteilerplatte (2) für Flüssigkeiten und/oder Gase bestehend aus:

> Wenigstens einer Schicht (21), in der eine Vielzahl von ersten länglichen Kanälen (211) mit einer ersten geometrischen Ausbildung im wesentlichen in einer ersten Richtung (X) ausgebildet sind, und
> eine Vielzahl von zweiten länglichen Kanälen (212) mit einer zweiten geometrischen Ausbildung im wesentlichen in einer zweiten Richtung (Y) ausgebildet sind, wobei mittels geeigneter Bohrungen in Zwischenräume zwischen nebeneinander angeordnete Kanäle (211, 212) mindestend ein erster und zweiter Kanal miteinander verbindbar sind, so daß eine Flüssigkeit von einer ersten Öffnung des ersten Kanals zu einer zweiten Öffnung des zweiten Kanals fließen kann.

2. Verteilerplatte (1; 3; 4; 5) für Flüssigkeiten und/oder Gase bestehend aus:

einer Schichtenfolge mit

einer ersten Schicht (11,12,13,14; 21; 31, 32; 41, 42; 51, 52, 53),

in der eine Vielzahl von ersten länglichen Kanälen (111, 121, 131, 141; 211, 212, 311, 321, 411, 421; 511, 521, 531) mit einer ersten geometrischen Ausbildung im wesentlichen in einer ersten Richtung (X) ausgebildet sind, und wenigstens

einer zweiten Schicht (11,12,13,14; 21; 31, 32; 41, 42; 51, 52, 53),

in der eine Vielzahl von zweiten länglichen Kanälen (111, 121, 131, 141; 211, 212, 311, 321, 411, 421; 511, 521, 531) mit einer zweiten geometrischen Ausbildung im wesentlichen in einer zweiten Richtung (Y) ausgebildet sind; wobei

mittels geeigneter Bohrungen in Zwischenräume übereinander und / oder nebeneinander angeordneter Kanäle (111, 121, 131, 141; 211, 212, 311, 321, 411, 421; 511, 521, 531) der ersten und / oder zweiten Schicht (11,12,13,14; 21; 31, 32; 41, 42; 51, 52, 53) mindestens ein erster und zweiter Kanal miteinander verbindbar sind, so daß eine Flüssigkeit von einer ersten Öffnung des ersten Kanals zu einer zweiten Öffnung des zweiten Kanals fließen kann.

3. Verteilerplatte (1; 2; 3; 4; 5) nach Anspruch 1 oder 2, bestehend aus:

einer Vielzahl von übereinander angeordneten Schichten (11,12,13,14; 21; 31, 32; 41, 42; 51, 52, 53), in denen jeweils eine Vielzahl von länglichen Kanälen mit ähnlicher geometrischer Ausbildung ausgebildet ist.

4. Verteilerplatte (1; 2; 3; 4; 5) nach Anspruch 1 oder 2, wobei:

die erste Richtung (X) und zweite Richtung (Y) schließen einen Winkel von ungefähr 90 Grad ein.

5. Verteilerplatte (1; 2; 3; 4; 5) nach Anspruch 1 oder 2, wobei:

die erste Richtung (X) und zweite Richtung (Y) schließen einen Winkel von ungefähr 60 Grad ein.

6. Verteilerplatte (1; 2; 3; 4; 5) nach Anspruch 1 oder 2, wobei:

die Verteilerplatte besteht außerdem aus einer dritten Schicht (11,12,13,14 ;21; 31, 32; 41, 42; 51, 52, 53),

in der eine Vielzahl von dritten länglichen Kanälen (111, 121, 131, 141; 211, 212, 311, 321, 411, 421; 511, 521, 531) mit einer dritten geometrischen Ausbildung im wesentlichen in der ersten Richtung (X) ausgebildet sind.

7. Verteilerplatte (1; 2; 3; 4; 5) nach Anspruch 6, wobei:

die Kanäle (111, 121, 131, 141; 211, 212, 311, 321, 411, 421; 511, 521, 531) in der ersten bis dritten Schicht derart ausgebildet sind, daß bei übereinander angeordneten Schichten die Projektion der Kanäle auf eine Ebene ein Raster ergibt, das eine Vielzahl gleich großer Flächen begrenzt.

8. Verteilerplatte (1; 2; 3; 4; 5) nach Anspruch 4, wobei:

die ersten Kanäle (111, 121, 131, 141; 211, 212, 311, 321, 411, 421; 511, 521, 531) in der ersten Schicht eine erste Länge (x1) und eine erste Breite (y1) haben, und

eine Vielzahl der ersten Kanäle in der ersten Richtung (X) in einer Vielzahl von Reihen angeordnet sind, wobei

die Kanäle in den Reihen mit gleichbleibendem ersten Abstand (dx1) hintereinander angeordnet sind, und wobei

zwei benachbarte Reihen in der ersten Richtung (X) um einen ersten Verschiebungsbetrag (dx11) gegeneinander verschoben sind, und zwei benachbarte Reihen in der zweiten Richtung (Y) einen ersten Reihenabstand (dy11) haben.

9. Verteilerplatte (1; 2; 3; 4; 5) nach Anspruch 8, wobei:

die zweiten Kanäle (111, 121, 131, 141; 211, 212, 311, 321, 411, 421; 511, 521, 531) in der zweiten Schicht eine zweite Länge (y2) und eine zweite Breite (x2) haben, und

die Kanäle in Richtung der zweiten Richtung (Y) in einer Vielzahl von Reihen angeordnet sind, wobei

die Kanäle in den Reihen mit gleichbleibendem zweiten Abstand (dy2) hintereinander angeordnet sind, und wobei

zwei benachbarte Reihen in der zweiten Richtung (Y) um einen zweiten Verschiebungsbetrag (dy22) gegeneinander verschoben sind, und

zwei benachbarte Reihen in der ersten Richtung (Y) einen zweiten Reihenabstand (dx22) haben.

10. Verteilerplatte (1; 2; 3; 4; 5) nach Anspruch 9, wobei:

die erste Länge (x1) entspricht der zweiten Länge (y2);
die erste Breite (y1) entspricht der zweiten Breite (x2);
der erste Abstand (dx1) entspricht dem zweiten Abstand (dy2);
der erste Verschiebungsbetrag (dx11) entspricht dem zweiten Verschiebungsbetrag (dy22);
der erste Reihenabstand (dy11) entspricht dem zweiten Reihenabstand (dx22).

11. Verteilerplatte (1; 2; 3; 4; 5) nach Anspruch 9 oder 10, wobei:

die erste Breite (y1) entspricht dem ersten Reihenabstand (dy11), und
die erste Breite (y1) entspricht außerdem dem ersten Abstand (dx1), und
der erste Verschiebungsbetrag (dx11) ist ungefähr doppelt so groß wie der erste Abstand (dx1).

12. Verteilerplatte (1; 2; 3; 4; 5) nach Anspruch 9, wobei:

die erste Länge (x1) ist ungefähr fünfmal so goß wie die erste Breite (y1),
die zweite Länge (y2) ist ungefähr viermal so groß wie die erste Breite (y1);
die erste Breite (y1)entspricht der zweiten Breite (x2);
der erste Reihenabstand (dy11) ist ungefähr halb so groß wie der zweite Reihenabstand (dx22);
der erste Verschiebungsbetrag (dx11) ist ungefähr doppelt so groß wie der erste Reihenabstand (dy11);
der zweite Verschiebungsbetrag (dy22) ist ungefähr doppelt so groß wie die Summe aus erster Breite (y1) und erstem Reihenabstand (dy11).

13. Verteilerplatte (1; 2; 3; 4; 5) nach einem der vorstehenden Ansprüche, wobei:

die Kanäle sind in der Oberseite der Schichten bis zu einer Tiefe ausgebildet, die geringer ist als die Schichtdicke, und
auf der obersten Schicht ist eine Deckschicht (D) angeordnet.

14. Verteilerplatte (1; 2; 3; 4; 5) nach einem der vorstehenden Ansprüche 1 bis 12, wobei:

die Kanäle sind in der Oberseite der Schichten durch die Schichten hindurchgehend ausgebildet, und
zwischen benachbarten Schichten ist eine Zwischenschicht angeordnet, die die Kanäle abdeckt, und
unter der untersten und über der obersten Schicht ist eine Grundschicht bzw. Deckschicht (D) angeordnet.

15. Verteilerplatte (1; 2; 3; 4; 5) nach einem der vorstehenden Ansprüche, wobei:

die Schichten (11,12,13,14; 21; 31, 32;41; 42; 51, 52, 53) haben eine Länge von 5 mm bis 200 mm, eine Breite von 5 mm bis 200 mm und eine Dicke von 0,1 mm bis 5 mm; und die Kanäle (111, 121, 131, 141; 211, 212, 311, 321, 411, 421; 511, 521, 531) haben eine Länge von 1 mm bis 100 mm, Breite von 0,1 mm bis 5 mm, Tiefe von 0,05 mm bis 5 mm,

16. Verteilerplatte (1; 2; 3; 4; 5) nach einem der vorstehenden Ansprüche, wobei:

die Schichten sind aus Kunststoffund mittels Spritzguß oder Abformung hergestellt.

17. Verteilerplatte (1; 2; 3; 4) nach einem der vorstehenden Ansprüche, wobei:

die Bohrungen sind mittels Lasertechnik ausgebildet.

18. Verfahren zur Herstellung einer Verteilerplatte (1; 2; 3; 4; 5) nach einem der vorstehenden Ansprüche, mit den Schritten:

- Ausbildung einer Vielzahl der Schichten mit Kanälen;
- Auswahl von mindestens zwei Schichten;
- Anordnung der Schichten übereinander;
- Ausbildung der Bohrungen an vorbestimmten Positionen in der Schichtenfolge;
- Bereitstellung von geeigneten Öffnungen der Oberseite und/oder der Unterseite.

19. Verfahren zur Kopplung von Bauteilen eines modularen Systems, **dadurch gekennzeichnet, daß**, eine Verteilerplatte (1; 2; 3; 4; 5) nach einem der vorstehenden Ansprüche verwendet wird.

**Fig. 1a**

**Fig. 1b**

Fig. 2a

**Fig. 3a**

13    131

**Fig. 3b**

14    141

Y

X

Fig. 4

**Fig. 5a**

11,12,13,14    111    121    1

X

E

Y

E1

131    141    E1    E

**Fig. 5b**

D    11    12    1    13    14

**Fig. 5c**

D    11    12    1    13    14    G

**Fig. 6a**  21  211  212  2  X  Y  E  E  E2  E1  E2  E1

**Fig. 6b**  212  211  213

**Fig. 6c**  211  212

**Fig. 7a**

311

dx1

x1

dx11

X

Y

y1

dy11

x1>y1

dy22

**Fig. 7b**

y2>x2

y2

312

dy2

dx22

x2

Fig. 8a

**311r**     **31**     **311**                            **311r**

Fig. 8b

**32**     **321**

X        Y

**Fig. 9a**

31,32    311    321    3    X    Y

E

E

E1    E1    x1 ~ 5y1    x2 ~ y1

dx1 ~ y1    y2 ~ x1

dy11 ~ dx1    dy2 ~ x2

dx11 ~ 2dx1    dy22 ~ 2x2

**Fig. 9b**    dx22 ~ x2

31    32    D    3

**Fig. 9c**    3

31    32    D

**Fig. 10a**  41  411

**Fig. 10b**  42  421

X  Y

**Fig. 11a**

41, 42    421    421    4    X    Y

E

E

E1

E1

E2

x1 ~ 5y1        x2 ~ y1

dx1 ~ y1        y2 ~ 4y1

dy11 ~ 1/2*dx1    dy2 ~ dy11

dx11 ~ 2dx1    dy22 ~ dy11 + y1

dx22 ~ x2

**Fig. 11b**

31    42    D    4

**Fig. 11c**

4

41    42    D

21

**Fig. 12a**

**Fig. 12b**

Fig. 13a

51, 52, 53

5

Fig. 13b

5

51   52   53   D

Fig. 14

Fig. 15

**Fig. 16a**

**Fig. 16b**

K

D

A - - - - - - - - - - - - - A

**Fig. 16d**

**Fig. 16c**

K1, D1

K1, D1

K2, D2

K2, D2